# EUROPÄISCHE PATENTANMELDUNG

(11) **EP 4 364 896 A1**
(43) Veröffentlichungstag der Anmeldung: **08.05.2024**
(21) Anmeldenummer: 23201515.6
(22) Anmeldetag: 04.10.2023
(51) Int. Cl.: B25F 5/00

(54) **VERFAHREN ZUR ANZEIGE EINER ZIELERREICHUNG EINER HANDWERKZEUGMASCHINE**

(30) Priorität: 02.11.2022 DE 102022211593
(71) Anmelder: Robert Bosch GmbH, 70442 Stuttgart (DE)
(72) Erfinder: Roehm, Heiko, 70176 Stuttgart (DE); Herr, Tobias, 70569 Stuttgart (DE); Erbele, Simon, 71154 Nufringen (DE); Hoelscher, Florian, 70180 Stuttgart (DE)

(57) **Zusammenfassung**

Es wird ein Verfahren (300) zur Anzeige einer Zielerreichung einer Handwerkzeugmaschine (100) offenbart, die Handwerkzeugmaschine (100) umfassend einen Antriebsmotor (114), das Verfahren umfassend die Schritte
- Aktivieren eines Zielerreichungsanzeigemodus (400) mittels einer Steuereinheit (170);
- Ermitteln eines Abschaltgrunds (410) des Antriebsmotors (114);
- Anzeigen der Zielerreichung mittels einer Anzeigeeinheit (210) in Abhängigkeit des Abschaltgrunds (410).

## Beschreibung

Die vorliegende Erfindung betrifft ein Verfahren zur Anzeige einer Zielerreichung einer Handwerkzeugmaschine nach dem Anspruch 1.

### Stand der Technik

Aus der CN206855337U ist eine Handwerkzeugmaschine einer Anzeige zur Anzeige eines Zustands der Handwerkzeugmaschine bekannt.

### Offenbarung der Erfindung

Die vorliegende Erfindung beschreibt ein Verfahren zur Anzeige einer Zielerreichung einer Handwerkzeugmaschine, die Handwerkzeugmaschine umfassend einen Antriebsmotor, das Verfahren umfassend die Schritte
- Aktivieren eines Zielerreichungsanzeigemodus mittels einer Steuereinheit;
- Ermitteln eines Abschaltgrunds des Antriebsmotors;
- Anzeigen der Zielerreichung mittels einer Anzeigeeinheit in Abhängigkeit des Abschaltgrunds.

Die Erfindung stellt ein Verfahren bereit, mittels dessen der Abschaltgrund einem Benutzer angezeigt werden kann. Dies ermöglicht, dass der Benutzer unmittelbar erkennen kann, ob ein Ziel erreicht wurde, beispielsweise ob eine Verschraubung vollständig durchgeführt wurde. Zudem ermöglicht das Verfahren, dass der Benutzer unmittelbar erkennen kann, ob ein Betriebsmodus vollständig oder unvollständig durchgeführt wurde. Die Anzeige der Zielerreichung der Handwerkzeugmaschine mittels der Anzeigeeinheit gibt hierüber dem Benutzer Kenntnis. Hierdurch wird ein Benutzerkomfort gesteigert, da der Benutzer eine korrekt durchgeführte Funktionsweise der Handwerkzeugmaschine überprüfen kann.

Die Handwerkzeugmaschine kann als eine elektrisch oder pneumatisch betriebene Handwerkzeugmaschine ausgebildet sein. Die elektrisch betriebene Handwerkzeugmaschine kann dabei als eine netzbetriebene oder als eine akkubetriebe Handwerkzeugmaschine ausgebildet sein. Beispielsweise kann die Handwerkzeugmaschine als ein Schrauber, ein Druckluftschrauber, ein Bohrschrauber, ein Drehschlagschrauber, ein Hammer, ein Bohrhammer, ein Druckluftdrehschlagschrauber oder ein Schlagbohrschrauber ausgebildet sein.

Das Gehäuse kann als ein Schalengehäuse mit beispielsweise zwei Halbschalen ausgebildet sein. Das Gehäuse nimmt zumindest eine Antriebseinheit auf. Die Antriebseinheit umfasst den Antriebsmotor und ein Getriebe. Der Antriebsmotor kann als ein elektrisch kommutierter Antriebsmotor, insbesondere als zumindest ein Elektromotor, ausgebildet sein. Der Antriebsmotor ist derart ausgestaltet, dass er über einen Handschalter betätigbar ist. Wird der Handschalter durch einen Benutzer betätigt, wird der Antriebsmotor eingeschalten und die Handwerkzeugmaschine wird in Betrieb genommen. Wird entsprechend der Handschalter durch den Benutzer nicht weiter betätigt, wird der Antriebsmotor ausgeschalten. Bevorzugt ist der Antriebsmotor derart elektronisch steuer- und/oder regelbar, dass ein Reversierbetrieb und eine Vorgabe für eine gewünschte Drehgeschwindigkeit realisierbar sind. Im Reversierbetrieb kann der Antriebsmotor zwischen einer Rechtslaufdrehrichtung und einer Linkslaufdrehrichtung umschaltbar sein. Zur Umschaltung des Antriebsmotors im Reversierbetrieb kann die Handwerkzeugmaschine ein Drehrichtungsumschaltelement, insbesondere einen Drehrichtungsumschalter, aufweisen. Der Antriebsmotor ist dazu ausgebildet, über das Getriebe eine Werkzeugaufnahme anzutreiben. Das Getriebe kann als zumindest ein Planetengetriebe ausgebildet sein, wobei es beispielsweise schaltbar sein kann. Das Planetengetriebe kann zumindest eine Planetenstufe aufweisen.

Die Handwerkzeugmaschine kann ein Schlagwerk aufweisen, das dazu ausgebildet ist, in einem Schlagbetrieb betrieben zu werden. Das Schlagwerk erzeugt während des Schlagbetriebs hohe Drehmomentspitzen, um so festsitzende Verbindungsmittel zu lösen oder Verbindungsmittel zu befestigen. Das Schlagwerk kann mit der Werkzeugaufnahme verbunden sein. Das Schlagwerk kann beispielsweise als ein Rotationsschlagwerk, ein Drehschlagwerk oder ein V-Nuten-Schlagwerk ausgebildet sein.

Die Werkzeugaufnahme kann als eine Werkzeuginnenaufnahme, wie beispielsweise eine Bitaufnahme, und/oder als eine Werkzeugaußenaufnahme, wie beispielsweise eine Nussaufnahme, ausgebildet sein. Es ist auch denkbar, dass die Werkzeugaufnahme als ein Bohrfutter ausgebildet ist. Die Werkzeugaufnahme kann Einsatzwerkzeuge, wie beispielsweise Schraubbits oder Steckschlüssel, aufnehmen, sodass ein Benutzer Schraubverbindungen von einem Befestigungselement mit einem Befestigungsträger herstellen kann.

Zusätzlich umfasst die Handwerkzeugmaschine eine Energieversorgung, wobei die Energieversorgung für einen Akkubetrieb mittels Akkus, insbesondere Handwerkzeugmaschinenakkupacks, und/oder für einen Netzbetrieb vorgesehen ist. In einer bevorzugten Ausführungsform ist die Energieversorgung für den Akkubetrieb ausgebildet. Im Rahmen der vorliegenden Erfindung soll unter einem "Handwerkzeugmaschinenakkupack" ein Zusammenschluss von zumindest einer Akkuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Lilon-Akkuzelle mit einer Nennspannung von 3,6 V ausgebildet sein. Beispielhaft kann der Handwerkzeugmaschinenakkupack bis zu zehn Akkuzellen umfassen, wobei auch eine andere Anzahl von Akkuzellen denkbar ist. Eine Ausführungsform als akkubetriebene Handwerkzeugmaschine als auch der Betrieb als netzbetriebene Handwerkzeugmaschine sind dem Fachmann hinreichend bekannt, weshalb hier nicht auf die Einzelheiten der Energieversorgung eingegangen wird.

In einer Ausführungsform weist das Gehäuse zumindest eine Energieversorgungshaltevorrichtung, insbesondere eine Handwerkzeugmaschinenakkupackhaltevorrichtung, der Energieversorgung auf, an der eine Benutzerschnittstelle angeordnet ist. Die Energieversorgungshaltevorrichtung ist insbesondere dazu ausgebildet, die Energieversorgung, insbesondere den Handwerkzeugmaschinenakkupack, zu halten, insbesondere aufzunehmen. Zusätzlich ist die Energieversorgungshaltevorrichtung dazu vorgesehen, die Energieversorgung, insbesondere den Handwerkzeugmaschinenakkupack, werkzeugfrei lösbar mit dem Gehäuse zu verbinden und die Energieversorgung der Handwerkzeugmaschine sicherzustellen. Die Energieversorgungshaltevorrichtung bildet mit einem verbundenen Handwerkzeugmaschinenakkupack zumindest einen Standfuß mit zumindest einer Standfläche aus. Insbesondere kann die Handwerkzeugmaschine mittels dem Standfuß auf einer Standfläche gelagert, insbesondere gestellt, werden. Das Gehäuse umfasst zudem einen Handgriff. Der Handgriff ist dazu ausgebildet, von dem Benutzer ergriffen zu werden, um die Handwerkzeugmaschine einzusetzen. Die Energieversorgungshaltevorrichtung ist insbesondere an dem Handgriff angeordnet.

Der Zielerreichungsanzeigemodus wird mittels der Steuereinheit aktiviert. Die Steuereinheit ist zumindest zur Steuerung des Antriebsmotors ausgebildet. Zudem kann die Steuereinheit in dem Gehäuse, beispielsweise in einem Handgriff der Handwerkzeugmaschine oder in einem Bereich einer Energieversorgungsschnittstelle, angeordnet sein. Die Steuereinheit kann zumindest einen Mikroprozessor oder einen Mikrocontroller umfassen. Der Zielerreichungsanzeigemodus kann zu einem bestehenden oder einstellbaren Betriebsmodus der Handwerkzeugmaschine, insbesondere des Antriebsmotors, zuschaltbar sein. Weiter ist es denkbar, dass der Zielerreichungsanzeigemodus zu einem zuschaltbaren Betriebsmodus fest eingestellt ist. Der Zielerreichungsanzeigemodus kann mittels einer Benutzerschnittstelle der Handwerkzeugmaschine oder mittels einer App eines externen, elektrischen Geräts aktiviert werden. Die Benutzerschnittstelle ist an dem Gehäuse angeordnet. Die Benutzerschnittstelle kann eine Schnittstelle zwischen dem Benutzer und der Handwerkzeugmaschine sein. Die Benutzerschnittstelle weist zumindest ein Bedienelement auf, das dazu ausgebildet, Eingaben durch den Benutzer zu empfangen. Vorteilhafter Weise dient das Bedienelement zumindest zur Einstellung oder Aktivierung des Betriebsmodus, des Zielerreichungsanzeigemodus, zumindest eines Status der Handwerkzeugmaschine und/oder einer Funktion der Handwerkzeugmaschine. Es ist denkbar, dass das Bedienelement auch zur Einstellung eines durch den Benutzer zuweisbaren Betriebsmodus belegbar ist. Wenn der Benutzer das Bedienelement betätigt, leitet die Benutzerschnittstelle die Eingabe des Benutzers an die Steuereinheit weiter. Die Steuereinheit steuert anschließend beispielsweise die Antriebsmotor. Es ist denkbar, dass die Handwerkzeugmaschine, insbesondere die Steuereinheit, eine Speichereinheit aufweist, auf der der Zielerreichungsanzeigemodus gespeichert ist. Es ist auch denkbar, dass der Zielerreichungsanzeigemodus auf der Steuereinheit hinterlegt ist.

Sobald der Antriebsmotor abschaltet bzw. stoppt, wird der Abschaltgrund des Antriebsmotors ermittelt. Dabei kann ein Grund für eine Abschaltung des Antriebsmotors erfasst werden. Beispielsweise ist der Grund für die Abschaltung ein Drehzahlstopp des Antriebsmotors, ein Stromzufuhrstopp oder ein Überhitzungstopp. Zudem kann der Grund für die Abschaltung eine Schutzabschaltung sein, welche die Handwerkzeugmaschine und/oder den Benutzer vor thermischen und/oder mechanischen Überlastungen oder vor einem leeren Akku, insbesondere Handwerkzeugmaschinenakkupack, schützt. Weiter kann der Grund der Abschaltung ein unbetätigter Handschalter sein. Zudem kann der Grund der Abschaltung ein durch einen Betriebsmodus ausgelöster Motorstopp sein. Der Abschaltgrund wird ermittelt, wenn der Antriebsmotor abschaltet.

In Abhängigkeit des Abschaltgrunds wird die Zielerreichung mittels der Anzeigeeinheit angezeigt. Die Benutzerschnittstelle weist die Anzeigeeinheit zur Anzeige des Status der Handwerkzeugmaschine auf. Die Steuereinheit steuert in Abhängigkeit des Abschaltgrunds die Anzeigeeinheit. Die Benutzerschnittstelle und die Steuereinheit sind elektrisch miteinander verbunden. Es ist denkbar, dass die Anzeigeeinheit eines externen elektrischen Geräts, wie beispielsweise eines Smartphones, verwendet wird.

Die Anzeigeeinheit ist dazu ausgebildet, den Status der Handwerkzeugmaschine anzuzeigen. Die Anzeigeeinheit kann beispielsweise durchgehend in einer Farbe leuchten oder in einer Farbe blinken. So ist es beispielhaft möglich, dass die Anzeigeeinheit in einer grünen, roten, blauen oder gelben Farbe leuchtet. Dabei kann der Status beispielsweise "Handwerkzeugmaschine eingeschaltet" oder "Handwerkzeugmaschine ausgeschaltet" sein. Bei eingeschalteter Handwerkzeugmaschine kann beispielsweise die Anzeigeeinheit in einer grünen Farbe leuchten. Bei einem halbvollen Handwerkzeugmaschinenakkupack kann die Anzeigeeinheit beispielsweise gelb leuchten. Bei einer überhitzten Antriebseinheit oder einem verbrauchten Handwerkzeugmaschinenakkupack kann die Anzeigeeinheit beispielsweise rot leuchten. Wenn die Handwerkzeugmaschine mittels eines externen, elektrischen Geräts, wie beispielsweise eines Smartphones, verbunden ist, kann die Anzeigeeinheit beispielsweise blau leuchten.

In einer Ausführungsform des Verfahrens wird in einem Verfahrensschritt ein Betriebsmodus der Handwerkzeugmaschine, insbesondere des Antriebsmotors, aktiviert. Der Betriebsmodus umfasst dabei eine Funktionsweise, wie die Handwerkzeugmaschine im Betrieb funktionieren soll. Der Betriebsmodus kann dabei beispielsweise ein Schraubmodus, ein Bohrmodus, ein Drehschlagmodus, ein harter/weicher Schraubfallmodus, ein Holzverschraubungsmodus, ein Metallverschraubungsmodus, ein Lösemodus, insbesondere ein Verschraubungslösemodus, eine Drehzahlstufe, ein Kickbackmodus oder ein Precision Clutch Modus sein. Der Betriebsmodus kann beispielsweise mittels der Benutzerschnittstelle eingestellt oder ausgewählt werden. Denkbar ist auch, dass der Betriebsmodus mittels einer App auf dem externen elektrischen Gerät aktivierbar ist. Sobald der Betriebsmodus aktiviert wird, wird ein Steuerbefehl an die Steuereinheit zur Aktivierung weitergeleitet. Der Zielerreichungsanzeigemodus ist dazu ausgebildet, den Betriebsmodus zu überprüfen. Dabei prüft der Zielerreichungsanzeigemodus, ob der Betriebsmodus ein hinterlegtes Ziel erreicht hat oder der Antriebsmotor frühzeitig abgeschaltet hat.

In einer Ausführungsform des Verfahrens wird als der Abschaltgrund, insbesondere des Antriebsmotors, ein Erreichen eines Zielwerts ermittelt. In dem Betriebsmodus ist der Zielwert hinterlegt. Nachdem der Betriebsmodus festgelegt wurde, kann der Zielwert festgelegt werden. Der Zielwert kann dabei fest im Betriebsmodus hinterlegt sein oder durch den Benutzer festlegbar sein. Zudem kann der Zielwert einstellbar oder voreingestellt sein. Bei dem einstellbaren Zielwert kann der Benutzer frühzeitig, also früher als hinterlegt, den Antriebsmotor abschalten. Der Zielwert kann beispielsweise sein eine Anzahl an Antriebsmotorumdrehungen, ein Stromverlauf des Antriebsmotors, eine Antriebsmotortemperatur, ein Bewegungsmuster des Antriebsmotors, eine Betriebsdauer des Antriebsmotors oder dergleichen. Das Erreichen des Zielwerts ist dabei derart zu verstehen, dass der Betriebsmodus im Wesentlichen vollständig durchgeführt wurde und der Antriebsmotor nach der Zielwerterreichung selbstständig, insbesondere im Wesentlichen ohne einen weiteren Einfluss des Benutzers, abschaltet.

In einer Ausführungsform des Verfahrens wird als der Abschaltgrund eine Abweichung eines Zielwerts ermittelt. Die Abweichung des Zielwerts kann beispielsweise aufgrund eines unvollständig oder frühzeitig beendeten Betriebsmodus entstehen. Beispiele hierfür wären, der Benutzer lässt frühzeitig den Handschalter los, der Benutzer drückt den Handschalter unvollständig durch, eine Batteriespannung des Akkus, insbesondere des Handwerkzeugmaschinenakkupacks, fällt unter einen kritischen Batteriespannungswert, eine Batteriebelastung des Akkus, insbesondere des Handwerkzeugmaschinenakkupacks übersteigt einen kritischen Batteriespannungswert, eine Antriebsmotortemperatur übersteigt einen kritischen Antriebsmotortemperaturwert, eine Batterietemperatur des Akkus, insbesondere des Handwerkzeugmaschinenakkupacks, übersteigt einen kritischen Batterietemperaturwert, eine Beschleunigung, insbesondere eine Beschleunigung des Gehäuses, der Handwerkzeugmaschine übersteigt einen kritischen Beschleunigungswert, ein Schutzalgorithmus hat einen Zielwert erreicht oder dergleichen. Die Abweichung des Zielwerts kann eine Abweichung eines Zielwerts des Antriebsmotors sein oder eine Abweichung eines Zielwerts einer Sensoreinheit der Handwerkzeugmaschine. So kann der Zielwert einen Sensorwert der Sensoreinheit umfassen, sodass der Abschaltgrund eine Abweichung des Sensorwerts zum Zielwert sein kann.

In einer Ausführungsform des Verfahrens wird in einem Verfahrensschritt eine Stellung eines Handschalters zur Steuerung des Antriebsmotors, insbesondere mittels der Steuereinheit, erfasst. Wie oben beschrieben, ist der Handschalter zur Steuerung des Antriebsmotors an dem Handgriff der Handwerkzeugmaschine angeordnet. Die Stellung, insbesondere eine Betätigungsstrecke, des Handschalters kann von der Steuereinheit erfasst werden. Die Stellung des Handschalters kann als ein Kriterium für den Abschaltgrund dienen. Ist der Handschalter beispielsweise beim Abschalten des Antriebsmotors vollständig gedrückt, kann von einer hohen Wahrscheinlichkeit eines vollständig durchgeführten Betriebsmodus ausgegangen werden. Ist der Handschalter beim Abschalten des Antriebsmotors unvollständig gedrückt, kann von einer hohen Wahrscheinlichkeit ausgegangen werden, dass der Betriebsmodus unvollständig durchgeführt wurde. Die Steuereinheit ermittelt daher die Stellung, insbesondere die Betätigungsstrecke, des Handschalters, um Rückschlüsse bezüglich einer Vollständigkeit des Betriebsmodus zu treffen.

In einer Ausführungsform des Verfahrens wird zur Ermittlung des Abschaltgrunds ein mit dem Antriebsmotor korrelierter Parameter, insbesondere mittels zumindest einer Sensoreinheit, erfasst. Der mit dem Antriebsmotor korrelierte Parameter kann beispielsweise sein, eine Antriebsmotordrehzahl, eine Anzahl Antriebsmotorumdrehungen, eine Anzahl an Hallflanken des Antriebsmotors, ein Antriebsmotorstrom, eine Antriebsmotorspannung, eine Antriebsmotortemperatur, eine Betriebsdauer des Antriebsmotors, eine Antriebsmotorbeschleunigung oder dergleichen. Die Sensoreinheit kann im oder am Gehäuse der Handwerkzeugmaschine angeordnet sein. Die Sensoreinheit kann beispielsweise ein Drehratensensor, ein Beschleunigungssensor, ein Hall-Sensor, ein Zeitmesssensor, ein Kickbacksensor oder dergleichen sein. Der mit dem Antriebsmotor korrelierte Parameter wird mittels der Steuereinheit verarbeitet. Die Sensoreinheit kann den Parameter an die Steuereinheit weiterleiten. Der Parameter kann ebenfalls zur Bewertung der Zielerreichung dienen.

In einer Ausführungsform des Verfahrens wird zur Ermittlung des Abschaltgrunds eine Auswertung eines Ereignisregisters durchgeführt. Das Ereignisregister kann in der Steuereinheit hinterlegt sein. Das Ereignisregister kann ebenso auf einem externen, elektrischen Gerät, wie beispielsweise einem Smartphone, einem Server oder einem Backend, hinterlegt sein. Das Ereignisregister kann beispielsweise als eine externe Software ausgebildet sein. Das Ereignisregister kann den Zielwert beispielsweise mittels einer Kommunikationseinheit erfassen und entsprechend auswerten. Dabei kann die Handwerkzeugmaschine und/oder das externe, elektrische Gerät jeweils eine Kommunikationseinheit aufweisen. Es ist möglich, dass die Steuereinheit und/oder das externe, elektrische Gerät eine Kombination des mit dem Antriebsmotor korrelierten Parameters und des Ereignisregisters auswertet. Weiter ist es möglich, dass die Steuereinheit das Ereignisregister ausliest, da im Ereignisregister der Abschaltgrund beim Abschalten des Antriebsmotors gespeichert wurde. Es ist möglich, dass die Steuereinheit beim Abschalten des Antriebsmotors durch den Benutzer einen Eintrag in dem Ereignisregister einträgt. Es ist möglich, dass in einem der Betriebsmodi als der Abschaltgrund eine Auswertung des Handschalters und des Ereignisregisters hinterlegt ist. So ist es möglich, dass bei einer Überprüfung des Zielwerts die Auswertung des Ereignisregister und/oder einer Stellung des Handschalters stattfindet, um zu entscheiden, ob der Zielwert erreicht wurde.

In einer Ausführungsform des Verfahrens wird die Zielerreichung während einer einstellbaren Anzeigedauer, insbesondere mittels der Anzeigeeinheit, angezeigt. Die Anzeigedauer kann mittels der Benutzerschnittstelle und/oder mittels der App eingestellt werden. Es ist auch möglich, dass die Anzeigedauer fest in der Steuereinheit hinterlegt ist. Die Anzeigedauer kann beispielsweise in einem Bereich von 1 s bis 30 s, insbesondere von 5 s bis 20 s, eingestellt werden. Nach einem Ablauf der Anzeigedauer wird die Anzeigeeinheit ausgeschaltet.

In einer Ausführungsform wird ein Übereinstimmungssignal mittels der Anzeigeeinheit angezeigt, wenn eine Zielerreichung ermittelt wird. Das Übereinstimmungssignal kann beispielsweise als eine grün leuchtende Anzeigeeinheit, insbesondere LED, sein. Weiter kann das Übereinstimmungssignal als ein akustisches und/oder haptisches Signal wiedergegeben werden. Das Übereinstimmungssignal kann hier ein im Wesentlichen vollständiges Erreichen des Zielwerts sein. Zudem kann das Übereinstimmungssignal eine im Wesentlichen vollständig durchgeführter Betriebsmodus sein. Beispielsweise kann der Zielwert in einem Bereich von 90% bis 100% erreicht worden sein.

In einer Ausführungsform des Verfahrens wird ein Abweichungssignal mittels der Anzeigeeinheit angezeigt, wenn eine Abweichung zur Zielerreichung ermittelt wird. Als das Abweichungssignal kann die Anzeigeeinheit, insbesondere zumindest eine LED, beispielsweise gelb oder rot leuchten. Weiter ist es möglich, dass das Abweichungssignal als ein akustisches und/oder haptisches Signal wiedergegeben wird. So kann beispielsweise das Abweichungssignal als eine Bewegung der Werkzeugaufnahme, insbesondere des Bohrfutters, wiedergegeben werden. Weiter ist es möglich, dass das Abweichungssignal als ein Drehschwingbetrieb des Antriebsmotors, beispielsweise mit Drehschwingungen in einem hörbaren Frequenzbereich in einem Bereich von 20 Hz bis 20 000 Hz, insbesondere in einem Bereich von 200 Hz bis 10 000 Hz, mit einer Amplitude kleiner als 60°, insbesondere kleiner als 30°, ganz insbesondere kleiner als 10°, und/oder mit Hubbewegungen kleiner als 2 mm der Werkzeugaufnahme wiedergegeben wird. Das Abweichungssignal kann dabei eine Information darüber umfassen, dass der Benutzer vorzeitig die Handwerkzeugmaschine abgeschaltet hat oder den Handschalter unvollständig während der Durchführung des Betriebsmodus betätigt hat. Das Abweichungssignal umfasst die Abweichung des eingestellten Betriebsmodus zu dem tatsächlich durchgeführten Betriebsmodus. Das Abweichungssignal wird angezeigt, wenn die Abweichung im Bereich von 1% bis 10% von dem Zielwert beträgt. Hier wird das Abweichungssignal deutlich unterscheidbar zu dem Übereinstimmungssignal dargestellt, sodass der Benutzer sofort und unmittelbar erkennen kann, ob der eingestellte Betriebsmodus ordnungsgemäß oder unordnungsgemäß durchgeführt wurde.

In einer Ausführungsform wird die Anzeigeeinheit zu einer kontinuierlichen oder Intervall Wiedergabe der Zielerreichung, insbesondere mittels der Steuereinheit, angesteuert. Die kontinuierliche oder Intervall Wiedergabe kann beispielsweise während einer festgelegten oder festlegbaren Zeitdauer erfolgen. Die Intervall-Wiedergabe kann beispielsweise ein Blinken oder ein Dimmen sein. Sowohl das Übereinstimmungssignal als auch das Abweichungssignal kann als die kontinuierliche oder Intervall Wiedergabe wiedergegeben werden.

In einer Ausführungsform wird der Zielerreichungsanzeigemodus mittels einer Kommunikationseinheit der Handwerkzeugmaschine aktiviert. Im Rahmen der vorliegenden Erfindung ist die Kommunikationseinheit dazu ausgebildet, eine Kommunikationsverbindung mit zumindest dem externen, elektrischen Gerät herzustellen und Kommunikationssignale zu senden und/oder zu empfangen. Die Kommunikationssignale können leitungsgebunden, über eine Drahtverbindung oder aber über Leiterbahnen auf einer Leiterplatine, übertragen werden und/oder die Kommunikationssignale können drahtlos übermittelt werden. Eine drahtlose Übermittelung der Kommunikationssignale kann dabei in Form von Bluetooth, WLAN, Infrarot, Nahfeldkommunikation (NFC) mittels RFID-Technik sein, als auch weitere, dem Fachmann geläufige, drahtlose Übermittelungen der Kommunikationssignale. Verwendete Kommunikationsprotokolle können hierbei Bluetooth Smart, GSM, UMTS, LTE, ANT, ZigBee, LoRa, SigFox, NB-loT, BLE, IrDA sein, als auch weitere, dem Fachmann geläufige, Kommunikationsprotokolle. Die Kommunikationsverbindung kann daher drahtlos oder aber drahtgebunden sein. Die Kommunikationseinheit der Handwerkzeugmaschine ist elektrisch mit der Steuereinheit verbunden.

Sowohl das Abweichungs- als auch das Übereinstimmungssignal können über die Kommunikationseinheit zu einem externen, elektrischen Gerät gesendet werden und dort als das Abweichungs- bzw. das Übereinstimmungssignal angezeigt werden. Des Weiteren können das Abweichungs- und/oder das Übereinstimmungssignal auf dem externen, elektrischen Gerät, insbesondere einer Speichereinheit des externen, elektrischen Geräts, gespeichert werden. Es ist auch denkbar, dass das Abweichungs- und/oder das Übereinstimmungssignal an ein Backend weitergeleitet werden kann, um diese dort zu speichern.

Bei der Verwendung der Handwerkzeugmaschine hat der Benutzer verschiedene Möglichkeiten, mittels welchen Steuerungsprogrammen der Benutzer die Handwerkzeugmaschine betreiben kann. So kann der Benutzer die Handwerkzeugmaschine ohne dem eingestellten Betriebsmodus und ohne dem Zielerreichungsanzeigemodus verwenden. Hier kann der Benutzer beispielsweise ohne eine Unterstützung mittels eines Steuerungsprogramms die Handwerkzeugmaschine in gewohnter Weise verwenden, insbesondere einsetzen. Weiter steht dem Benutzer die Möglichkeit zur Verfügung, dass dieser den Betriebsmodus mittels der Benutzerschnittstelle und/oder der App einstellt, sodass die Handwerkzeugmaschine nach Vorgaben des Betriebsmodus betrieben wird. Hier kann dann der Benutzer die Handwerkzeugmaschine mit dem eingestellten Betriebsmodus verwenden. Zudem kann der Benutzer zusätzlich oder alternativ den Zielerreichungsanzeigemodus aktivieren, sodass nach der Verwendung der Handwerkzeugmaschine dem Benutzer angezeigt wird, ob er sein gewünschtes Ziel erreicht hat. So ist es möglich, dass der Benutzer den Zielerreichungsanzeigemodus mittels der Benutzerschnittstelle und/oder der App aktiviert und die Handwerkzeugmaschine einsetzt. Weiter ist es möglich, dass der Benutzer zuerst den Betriebsmodus einstellt und anschließend den Zielerreichungsanzeigemodus aktiviert. Somit kann der Benutzer bewusst entscheiden, mittels welcher Kombination an den Betriebsmodi und dem Zielerreichungsanzeigemodus dieser die Handwerkzeugmaschine verwenden möchte.

Die Erfindung geht auch von einer oben beschriebenen Steuereinheit aus, umfassend Mittel zur Ausführung des Verfahrens nach den oben beschriebenen Schritten.

Die Erfindung geht ebenfalls von einer oben beschriebenen Handwerkzeugmaschine umfassend eine oben beschriebene Steuereinheit zur Ausführung des Verfahrens nach den oben beschriebenen Schritten aus.

### Kurze Beschreibung der Zeichnungen

Die Erfindung wird nachfolgend anhand von einer bevorzugten Ausführungsform erläutert. Die Zeichnungen im Folgenden zeigen:
Fig. 1 eine schematische Ansicht einer erfindungsgemäßen Handwerkzeugmaschine;
Fig. 2 ein erfindungsgemäßes Verfahrensdiagramm;
Fig. 3 eine beispielhafte Darstellung einer App auf einem externen, elektrischen Gerät;

### Beschreibung des Ausführungsbeispiels

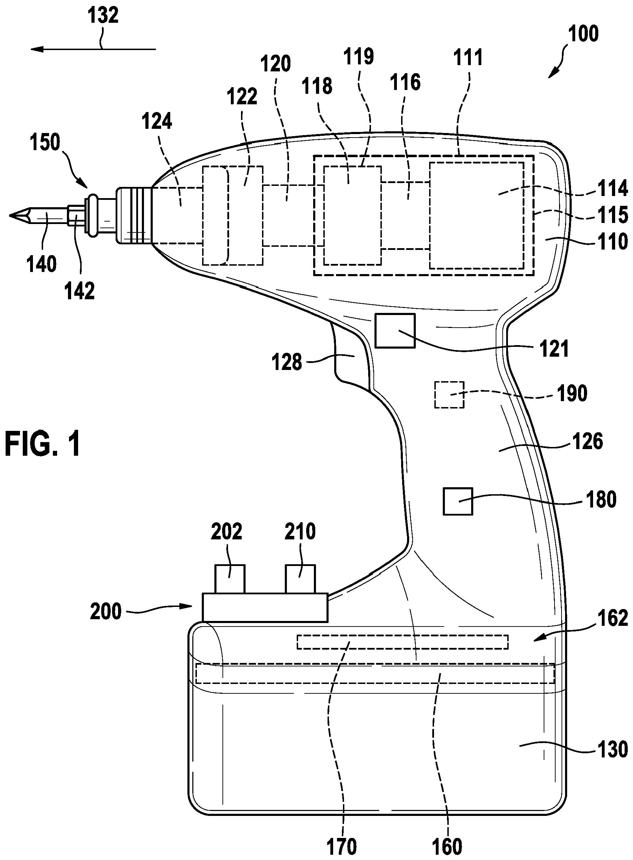

Fig. 1 zeigt eine erfindungsgemäße Handwerkzeugmaschine 100, wobei sie hier als ein beispielhafter Akku-Drehschlagschrauber ausgebildet ist. Die Handwerkzeugmaschine 100 umfasst eine Abtriebswelle 124, eine Werkzeugaufnahme 150 und ein beispielhaftes Schlagwerk 122. Die Handwerkzeugmaschine 100 weist ein Gehäuse 110 mit einem Handgriff 126 auf. Die Handwerkzeugmaschine 100 ist zu einer netzunabhängigen Stromversorgung mechanisch und elektrisch mit einer Energieversorgung für einen Akkubetrieb verbindbar, sodass die Handwerkzeugmaschine 100 als akkubetriebene Handwerkzeugmaschine 100 ausgebildet ist. Als Energieversorgung dient hier ein Handwerkzeugmaschinenakkupack 130. Die vorliegende Erfindung ist jedoch nicht auf akkubetriebene Handwerkzeugmaschinen beschränkt, sondern kann auch bei netzabhängigen, also netzbetriebenen, Handwerkzeugmaschinen oder pneumatisch betriebenen Handwerkzeugmaschinen angewendet werden.

Das Gehäuse 110 umfasst dabei illustrativ eine Antriebseinheit 111 und das Schlagwerk 122. Die Antriebseinheit 111 umfasst ferner einen elektrischen Antriebsmotor 114, welcher von dem Handwerkzeugmaschinenakkupack 130 mit Strom versorgt wird, und ein Getriebe 118. Das Getriebe 118 kann als zumindest ein Planetengetriebe ausgebildet sein. Der Antriebsmotor 114 ist derart ausgelegt, dass er beispielsweise über einen Handschalter 128 betätigbar ist, sodass der Antriebsmotor 114 ein- und ausschaltbar ist. Vorteilhaft ist der Antriebsmotor 114 elektronisch steuer- und/oder regelbar, sodass ein Reversierbetrieb, sowie eine gewünschte Drehgeschwindigkeit, realisierbar sind. Für den Reversierbetrieb weist die Handwerkzeugmaschine 100 ein Drehrichtungsumschaltelement 121 auf, das als ein Drehrichtungsumschalter ausgebildet ist. Das Drehrichtungsumschaltelement 121 ist dazu ausgebildet, den Antriebsmotor 114 zwischen einer Rechtslaufdrehrichtung und einer Linkslaufdrehrichtung umzuschalten.

Das Getriebe 118 ist mit dem Antriebsmotor 114 über eine Motorwelle 116 verbunden. Das Getriebe 118 ist dazu vorgesehen, eine Drehung der Motorwelle 116 in eine Drehung zwischen dem Getriebe 118 und dem Schlagwerk 122 über ein Antriebsglied 120, beispielsweise einer Antriebswelle, umzuwandeln. Illustrativ ist dem Antriebsmotor 114 ein Motorgehäuse 115 zugeordnet, wie dem Getriebe 118 ein Getriebegehäuse 119. Das Motorgehäuse 115 wie auch das Getriebegehäuse 119 sind beispielshaft in dem Gehäuse 110 angeordnet. Es ist jedoch auch denkbar, dass der Antriebsmotor 114 und das Getriebe 118 unmittelbar im Gehäuse 110 angeordnet sein können, wenn die Handwerkzeugmaschine 100 in einer "open frame"-Bauweise ausgebildet ist.

Das beispielhafte Schlagwerk 122 ist zum Antrieb der Abtriebswelle 124 ausgebildet. An der Abtriebswelle 124 ist eine Werkzeugaufnahme 150 vorgesehen. Bevorzugt ist die Werkzeugaufnahme 150 an der Abtriebswelle 124 angeformt und/oder ausgebildet. Vorzugsweise ist die Werkzeugaufnahme 150 in einer von der Antriebseinheit 111 wegweisenden, axialen Richtung 132 angeordnet. Die Werkzeugaufnahme 150 ist hier als eine Innensechskantaufnahme, nach Art eines Bithalters, ausgebildet, welche dazu vorgesehen ist, ein Einsatzwerkzeug 140 aufzunehmen. Das Einsatzwerkzeug ist nach Art eines Schrauberbits mit einer Mehrkant-Außenkupplung 142 ausgeformt. Die Art des Schrauberbits, beispielsweise nach HEX-Typ, ist dem Fachmann hinlänglich bekannt. Die vorliegende Erfindung ist jedoch nicht auf eine Verwendung von HEX-Schrauberbits beschränkt, sondern auch weitere, dem Fachmann als sinnvoll erscheinende, Werkzeugaufnahmen können Anwendung finden, wie beispielsweise HEX-Bohrer, SDS-Quick-Einsatzwerkzeuge oder Rundschaftbohrfutter.

Die Handwerkzeugmaschine 100 weist das Gehäuse 110, eine Steuereinheit 170 zumindest zur Steuerung der Antriebseinheit 111, eine Kommunikationseinheit 180 und eine Benutzerschnittstelle 200 auf. Das Gehäuse 110 nimmt zumindest die Steuereinheit 170, die Kommunikationseinheit 180 und die Benutzerschnittstelle 200 zumindest teilweise auf. Die Benutzerschnittstelle 200 umfasst ein Bedienelement 202 und eine Anzeigeeinheit 210, wobei auch mehr als weitere Bedienelemente denkbar sind. Das Bedienelement 202 kann Eingaben durch einen Benutzer empfangen. Das Bedienelement 202 ist von dem Benutzer betätigbar, wobei hier das Bedienelement 202 als ein Drückerelement ausgebildet ist. Die Steuereinheit 170 weist zumindest einen Mikrocontroller auf. Die Steuereinheit 170 empfängt Schaltsignale, die unter Verwendung des Handschalters 128 erzeugt werden. Zudem verarbeitet die Steuereinheit 170 die Schaltsignale des Handschalters 128, bevor die Steuereinheit 170 die Schaltsignale an die Antriebseinheit 111 weiterleitet. Zusätzlich empfängt die Steuereinheit 170 Benutzerschnittstellensignale von der Benutzerschnittstelle 200. Die Benutzerschnittstellensignale werden durch die Eingaben des Benutzers über das Bedienelement 202 erzeugt. Die Steuereinheit 170 verarbeitet die Benutzerschnittstellensignale in zumindest ein Ausgabesignal und gibt dieses aus. Das Ausgabesignal wird an die Benutzerschnittstelle 200 und/oder die Antriebseinheit 111 gesendet. Die Benutzerschnittstelle 200 ist elektrisch mit der Steuereinheit 170 verbunden. Die Kommunikationseinheit 180 ist hier beispielhaft teilweise im Handgriff 126 angeordnet. Die Kommunikationseinheit 180 ist dazu ausgebildet, eine Kommunikationsverbindung mit einem externen, elektrischen Gerät, wie beispielsweise einem Smartphone, auszubilden. Zudem ist die Kommunikationseinheit 180 dazu ausgebildet, Kommunikationssignale zu senden und/oder zu empfangen. Weiter ist die Kommunikationseinheit 180 mit der Steuereinheit 170 verbunden, sodass die Steuereinheit 170 die Kommunikationssignale verarbeiten kann.

Die Anzeigeeinheit 210 zeigt einen Status der Handwerkzeugmaschine 100 mittels einer leuchtenden Farbe an, wobei die Farbe im Wesentlichen durchgängig leuchtend oder blinkend darstellbar ist. Beispielsweise kann die Anzeigeeinheit 210 in einer grünen, roten, blauen oder gelben Farbe leuchten.

Weiter umfasst das Gehäuse 110 eine Energieversorgungshaltevorrichtung 160. Ferner ist die Benutzerschnittstelle 200 an der Energieversorgungshaltevorrichtung 160 angeordnet. Die Energieversorgungshaltevorrichtung 160 nimmt den Handwerkzeugmaschinenakkupack 130 auf und bildet dabei einen Standfuß 162 mit einer Standfläche aus. Der Handwerkzeugmaschinenakkupack 130 ist werkzeuglos von der Energieversorgungshaltevorrichtung 160 lösbar. Weiter weist das Gehäuse 110 den Handgriff 126 und die Energieversorgungshaltevorrichtung 160 auf. Der Handgriff 126 kann von dem Benutzer ergriffen werden. In einer Ausführungsform ist die Energieversorgungshaltevorrichtung 160 an dem Handgriff 126 angeordnet. Mittels des Standfußes 162 kann die Handwerkzeugmaschine 100 abgestellt werden. Die Benutzerschnittstelle 200 ist in dieser Ausführungsform an der Energieversorgungshalteeinheit 160 angeordnet.

Das Gehäuse 110 weist eine Sensoreinheit 190 auf. Die Sensoreinheit 190 ist im oder am Gehäuse 110 angeordnet. Die Sensoreinheit 190 ist mit der Steuereinheit 170 verbunden. Die Sensoreinheit 190 ist dazu vorgesehen, einen mit dem Antriebsmotor 114 korrelierten Parameter 220 zu erfassen und an die Steuereinheit 170 weiterzuleiten.

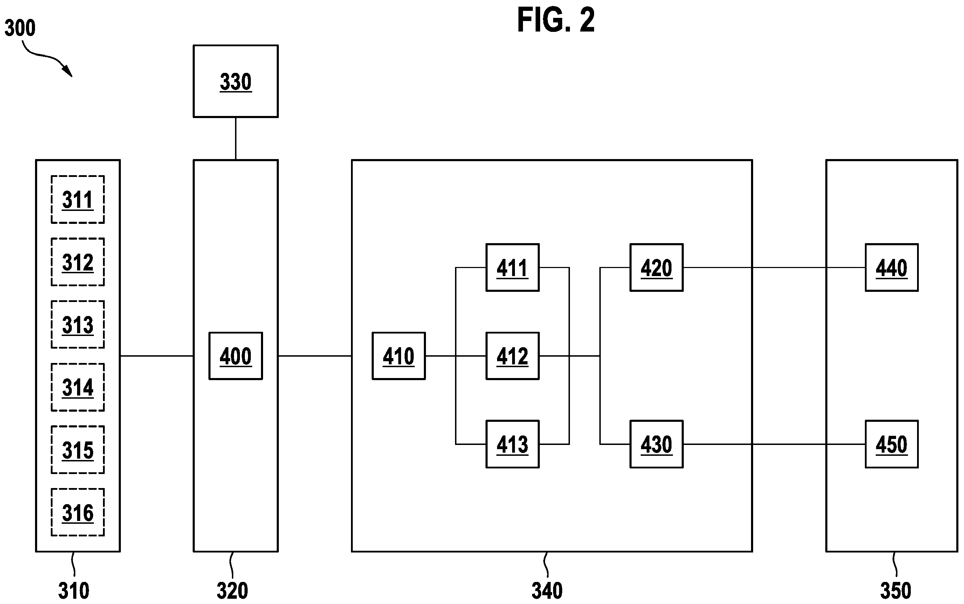

Fig. 2 zeigt ein erfindungsgemäßes Verfahren 300 zur Anzeige einer Zielerreichung der Handwerkzeugmaschine 100. In einem Verfahrensschritt 310 wird ein Betriebsmodus 305 der Handwerkzeugmaschine 100, insbesondere des Antriebsmotors 114, aktiviert. Der Betriebsmodus305 kann dabei beispielsweise ein Schraubmodus 311, ein Bohrmodus 312, ein Drehschlagmodus 313, ein Holzverschraubungsmodus 314, ein Metallverschraubungsmodus 315, ein Lösemodus 316 oder dergleichen. Dabei wird der Betriebsmodus 305 mittels der Benutzerschnittstelle 200 eingestellt oder ausgewählt oder wird mittels einer App 500 aktiviert.

In einem Verfahrensschritt 320 wird ein Zielerreichungsanzeigemodus 400 mittels der Steuereinheit 170 aktiviert. Der Verfahrensschritt 320 folgt dem Verfahrensschritt 310. Der Zielerreichungsanzeigemodus 400 überprüft, ob der aktivierte Betriebsmodus 305 ein hinterlegtes Ziel erreicht hat oder der Antriebsmotor 114 frühzeitig abgeschaltet hat. Dabei ist der Zielerreichungsanzeigemodus 400 einem bestehenden oder einstellbaren Betriebsmodus 305 zuschaltbar, kann aber auch fest in einem zuschaltbaren Betriebsmodus 305 eingestellt sein. Der Zielerreichungsanzeigemodus 400 wird mittels der Benutzerschnittstelle 200 oder mittels einer App 500 aktiviert.

In einem optionalen Verfahrensschritt 330, wird der Zielerreichungsanzeigemodus 400 mittels der Kommunikationseinheit 180 aktiviert. Die Kommunikationseinheit 180 bildet eine Kommunikationsverbindung mit zumindest einem externen, elektrischen Gerät aus.

In einem Verfahrensschritt 340, der dem Verfahrensschritt 320 folgt, wird ein Abschaltgrunds 410 des Antriebsmotors 114 ermittelt. Der Abschaltgrund 410 wird dabei dann ermittelt, sobald der Antriebsmotor 114 abschaltet bzw. stoppt. Zur Ermittlung des Abschaltgrunds 410 wird in einem Verfahrensschritt 411 eine Stellung des Handschalters 128 erfasst. Optional wird in einem Verfahrensschritt 412 der mit dem Antriebsmotor 114 korrelierte Parameter 220 mittels zumindest der Sensoreinheit 190 erfasst. Der Parameter 220 dient zur Ermittlung des Abschaltgrunds 410. In einem optionalen Verfahrensschritt 413 wird zur Ermittlung des Abschaltgrunds 410 eine Auswertung eines Ereignisregisters durchgeführt. Anhand der Stellung des Handschalters 128, dem Parameter 220 und/oder der Auswertung des Ereignisregisters ermittelt die Steuereinheit 170 den Abschaltgrund 410, sobald der Antriebsmotor 114 gestoppt ist. Dabei wird beispielsweise als der Abschaltgrund 410 ein, insbesondere selbstständiges, Erreichen eines Zielwerts 420 ermittelt. Beispielhaft wird als der Abschaltgrund 430 eine Abweichung eines Zielwerts 430 des Antriebsmotors 114 ermittelt.

In einem Verfahrensschritt 350 wird die Zielerreichung mittels der Anzeigeeinheit 210 in Abhängigkeit des Abschaltgrunds 410 angezeigt. Der Verfahrensschritt 350 folgt dem Verfahrensschritt 340. Die Zielerreichung wird während einer einstellbaren Anzeigedauer angezeigt. Wenn die Steuereinheit 170 die Zielerreichung, also eine Übereinstimmung zwischen dem in dem eingestellten Betriebsmodus 305 eingestellten Zielwert und einem bei Abschalten erreichten Ist-Wertes, ermittelt, wird in einem Verfahrensschritt 440 ein Übereinstimmungssignal mittels der Anzeigeeinheit 210 angezeigt Das Übereinstimmungssignal wird beispielhaft als eine grün leuchtende Anzeigeeinheit 210 dargestellt. Wenn die Steuereinheit 170 eine Abweichung zur Zielerreichung ermittelt, wird ein Abweichungssignal mittels der Anzeigeeinheit 210 in einem Verfahrensschritt 450 angezeigt. Das Abweichungssignal wird mittels der Anzeigeeinheit 210 beispielhaft als eine gelb oder rot leuchtende Farbe angezeigt. Die Anzeigeeinheit 210 zeigt die Zielerreichung, insbesondere das Übereinstimmungssignal oder das Abweichungssignal, mittels einer kontinuierlichen oder Intervall Wiedergabe dar.

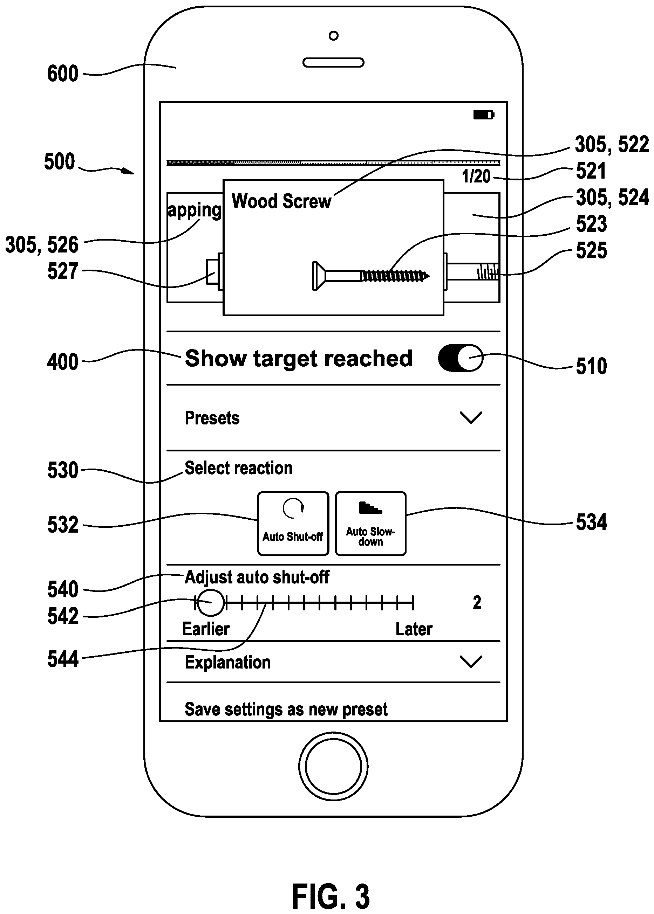

Fig. 3 zeigt eine beispielhafte Darstellung der App 500 auf einem externen, elektrischen Gerät, wie beispielsweise einem Smartphone 600. Die App 500 zeigt eine Auswahl 521 an verfügbaren Betriebsmodi 305. Beispielhaft ist ein Holzverschraubungsmodus 522 mit einer beispielhaften Holzschraube 523 dargestellt. Zudem zeigt die App 500 einen weiteren Betriebsmodus 305, nämlich einen Metallverschraubungsmodus 524 mit einer beispielhaften Metallschraube 525. Weiter zeigt die App 500 den Betriebsmodus 305 für eine Selbstschneidemodus 526 mit einer beispielhaften selbstschneidenden Schraube 527.

Die App 500 zeigt ebenfalls ein Auswahlfeld für den Zielerreichungsanzeigemodus 400. Dieser ist mittels eines Aktivierungsschalters 510 aktivierbar, sodass der Zielerreichungsanzeigemodus 400 zu dem ausgewählten Betriebsmodus 305 zuschaltbar ist. Für den Betriebsmodus 305 ist mittels der App 500 eine Reaktion 530 für die Zielerreichung einstellbar. So kann eine Autostopp-Funktion 532 oder eine Auto-Verlangsamungsfunktion 534 eingestellt werden. Bei der Autostopp-Funktion 532 kann beispielhaft ein Einstellung 540 für einen Zeitpunkt zur Durchführung der Autostopp-Funktion 532 mittels eines Einstellelements 542 auf einer Einstellleiste 544 eingestellt werden.

## Patentansprüche

1. Verfahren (300) zur Anzeige einer Zielerreichung einer Handwerkzeugmaschine (100), die Handwerkzeugmaschine (100) umfassend einen Antriebsmotor (114), das Verfahren umfassend die Schritte
- Aktivieren eines Zielerreichungsanzeigemodus (400) mittels einer Steuereinheit (170);
- Ermitteln eines Abschaltgrunds (410) des Antriebsmotors (114);
- Anzeigen der Zielerreichung mittels einer Anzeigeeinheit (210) in Abhängigkeit des Abschaltgrunds (410).

2. Verfahren (300) nach Anspruch 1, **dadurch gekennzeichnet, dass** in einem Verfahrensschritt (310) ein Betriebsmodus (305) der Handwerkzeugmaschine (100) aktiviert wird.

3. Verfahren nach Anspruch 1 oder 2, **dadurch gekennzeichnet, dass** als der Abschaltgrund (410) ein Erreichen eines Zielwerts ermittelt wird.

4. Verfahren (300) nach einem der Ansprüche 1 bis 3, **dadurch gekennzeichnet, dass** als der Abschaltgrund (410) eine Abweichung eines Zielwerts ermittelt wird.

5. Verfahren (300) nach einem der vorhergehenden Ansprüche, **dadurch gekennzeichnet, dass** in einem Verfahrensschritt (411) eine Stellung eines Handschalters (128) zur Steuerung des Antriebsmotors (114) erfasst wird.

6. Verfahren (300) nach einem der vorhergehenden Ansprüche, **dadurch gekennzeichnet, dass** zur Ermittlung des Abschaltgrunds (410) ein mit dem Antriebsmotor (114) korrelierter Parameter (220), insbesondere mittels zumindest einer Sensoreinheit (190), erfasst wird.

7. Verfahren (300) nach einem der vorhergehenden Ansprüche, **dadurch gekennzeichnet, dass** zur Ermittlung des Abschaltgrunds (410) eine Auswertung eines Ereignisregisters durchgeführt wird.

8. Verfahren (300) nach einem der vorhergehenden Ansprüche, **dadurch gekennzeichnet, dass** die Zielerreichung während einer einstellbaren Anzeigedauer angezeigt wird.

9. Verfahren (300) nach einem der vorhergehenden Ansprüche, **dadurch gekennzeichnet, dass** ein Abweichungssignal mittels der Anzeigeeinheit (210) angezeigt wird, wenn eine Abweichung zur Zielerreichung ermittelt wird.

10. Handwerkzeugmaschine (300) umfassend eine Steuereinheit (170) zur Ausführung des Verfahrens nach einem der vorhergehenden Ansprüche.
